# EUROPEAN PATENT SPECIFICATION

(11) **EP 3 532 588 B1**
(45) Date of publication and mention of the grant of the patent: **09.12.2020**
(21) Application number: 17784940.3
(22) Date of filing: 16.10.2017
(51) Int. Cl.: C11D 1/72, C11D 17/06, C11D 1/52, C11D 3/20, C11D 3/33

(54) **PHOSPHATE-FREE DETERGENT COMPOSITIONS AND THEIR APPLICATIONS**
PHOSPHATFREIE REINIGUNGSMITTELZUSAMMENSETZUNGEN UND DEREN ANWENDUNGEN
COMPOSITIONS DE DÉTERGENT SANS PHOSPHATE ET LEURS APPLICATIONS

(30) Priority: 26.10.2016 EP 16195811
(43) Date of publication of application: 04.09.2019
(73) Proprietor: BASF SE, 67056 Ludwigshafen am Rhein (DE)
(72) Inventor: GARCIA MARCOS, Alejandra, 67056 Ludwigshafen (DE); RATHS, Hans-Christian, 40589 Düsseldorf-Holthausen (DE); WEBER, Heike, 67056 Ludwigshafen (DE); HUEFFER, Stephan, 67056 Ludwigshafen (DE); ESKUCHEN, Rainer, 40589 Düsseldorf-Holthausen (DE); HERMANNS, Gerhard, 42699 Solingen (DE); EIDAMSHAUS, Christian, 67056 Ludwigshafen (DE)
(74) Representative: BASF IP Association
(86) International application number: PCT/EP2017/076328
(87) International publication number: WO 2018/077649

(56) References cited:
- WO-A1-00/39274
- WO-A1-2013/160216
- WO-A2-01/76729
- US-A- 4 676 915
- US-A- 5 035 841
- US-A- 5 700 772
- US-A- 6 034 257
- US-A- 6 096 125

## Description

The present invention is directed towards phosphate-free detergent composition according to claim 1 comprising (A) at least one additive according to formula (I)

R¹-CO-NH-CH₂CH₂-O-(AO)ₓ-CH₂CH₂-NH-CO-R² (I)

wherein
- R¹, R²: are same or different and selected from C₅-C₂₁-alkyl and C₆-C₂₀-alkenyl,
- x: is in the range of from 5 to 150,
- AO: is selected from identical or different alkylene oxides, selected from -CH₂-CH₂-O, -(CH₂)₃-O, -(CH₂)₄-O, -CH₂CH(CH₃)-O, -CH(CH₃)-CH₂-O- and -CH₂CH(n-C₃H₇)-O,
wherein said additive (A) has a melting point in the range of from 40 to 60°C.

Dishwashing compositions and especially automatic dishwashing (ADW) compositions have to satisfy many requirements. Thus, they have to fundamentally clean the dishes, they should have no harmful or potentially harmful substances in the waste water, they should permit the run-off and drying of the water from the dishes, and they should not lead to problems during operation of the dishwasher. Finally, they should not lead to esthetically undesired consequences on the ware to be cleaned. In this context, rinse agents that have excellent rinse performance are of interest. In many dishwashing formulations, such rinse agents are applied as carry-over surfactants. They are added to the dishwasher in 2-in-1, 3-in-1 or all-in-1 formulations, for example in tablets, but they exhibit the rinse performance only in the last step through traces not removed after the cleaning step.

So-called hydroxy mixed ethers are known to be excellent rinse agents, see, e.g., WO 94/22800. The formulations disclosed in WO 94/22800, however, contain sodium tripolyphosphate. The use of tripolyphosphate is under scrutiny due to environmental concerns. Numerous phosphate-free ADW formulations have been suggested since. Many of them suggest to replace phosphate by methylglycine diacetic acid (MGDA) and in particular by its trialkali salts, for example MGDA-Na₃, or by glutamic acid diacetic acid (GLDA), in particular by its tetraalkali metal salts, for example by GLDA-Na₄. Further additives suitable to be used in detergent compositions are disclosed in US 6 034 257, US 5 035 841 and US 4 676 915.

However, in some solid phosphate-free formulations, for example in tabs, the use of hydroxy methyl ethers may lead to problems, for example to inacceptable breaking rate during production.

It was therefore the objective of the present invention to provide a phosphate-free detergent composition that exhibits excellent rinse properties but no significant problems with breakage during tab production. It was further an objective of the present invention to make a phosphate-free detergent composition that exhibits excellent rinse properties but no significant problems with breakage during tab production.

Accordingly, the detergent compositions defined at the outset have been found, hereinafter also referred to as inventive detergent compositions or detergent compositions according to the present invention.

In the context of the present invention, the term "phosphate-free" shall mean that the content of phosphate and polyphosphate is in sum in the range from 10 ppm to 0.2% by weight, determined by gravimetric analysis, or even below detection level.

At ambient temperature, inventive detergent compositions may be liquid, gel-type or solid.

Inventive detergent compositions comprise
(A) at least one additive according to general formula (I) with a melting point in the range of from 40 to 60°C.

In the context of the present invention, said additive is also referred to as "additive (A)" or "component (A)". Additive (A) has a melting point in the range of from 40 to 60°C, preferably 50 to 60°C. Melting points in the context with the present invention are preferably determined by differential scanning calorimetry ("DSC"), with a heat rate of 1 °C/min.

Additive (A) bears two amide groups per molecule.

Additive (A) bears in the range of from 5 to 150 alkylene oxide units per molecule. Said range is to be understood as average value, in particular as number average. Preference is given to additives (A) with an average of 20 to 50 alkylene oxide units per molecule. Alkylene oxide groups are selected from C₂-C₅-alkylene oxide groups, for example -CH₂-CH₂-O-, -CH₂-CH(CH₃)-O-, -CH(CH₃)-CH₂-O, -(CH₂)₃-O-, -(CH₂)₄-O-, -CH₂-CH(n-C₃H₇)-O-, and combinations of at least two of the foregoing, for example combinations of -CH₂-CH₂-O- ("EO") with -CH₂-CH(CH₃)-O- ("PO"). In another preferred embodiment, all alkylene oxide groups in additive (A) are identical and EO.

As mentioned before, additive (A) is a compound according to general formula (I)

R¹-CO-NH-CH₂CH₂-O-(AO)ₓ-CH₂CH₂-NH-CO-R² (I)

wherein
- R¹, R²: are same or different and selected from C₅-C₂₁-alkyl, straight-chain or branched, and C₅-C₂₁-alkenyl with at least one C-C double bond, preferred is C₄-C₃₀-alkyl, straight-chain or branched, more preferred is straight-chain C₅-C₂₀-alkyl and even more preferred is n-C₆-C₁₆-alkyl, for example n-hexyl, n-heptyl, n-octyl, n-nonyl, n-decyl, n-undecyl, n-dodecyl, n-tridecyl, n-tetradecyl, and n-hexadecyl. In compounds according to general formula (I) it is preferred that R¹ and R² are identical. In compounds according to general formula (I) it is even more preferred that R¹ and R² are identical and selected from n-C₅-C₁₇-alkyl.
- x: is in the range of from 5 to 150, preferably 20 to 50. The variable x denotes an average value and refers to the weight average.
- AO: is selected from identical or different alkylene oxides, selected from -CH₂-CH₂-O, -(CH₂)₃-O-, -(CH₂)₄-O-, -CH₂CH(CH₃)-O, -CH(CH₃)-CH₂-O- and -CH₂CH(n-C₃H₇)-O-. Preferred are combinations of EO with at least one out of PO and BuO. In another preferred embodiment, all alkylene oxide groups in additive (A) are identical and EO.

Preferred examples of compounds according to general formula (I) are those with R1, R2 being identical and C₁₅-alkyl or C₁₇-alkyl, AO being the same and EO, and x being in the range of from 20 to 50.

Compounds according to general formula (I) may be conveniently synthesized by reductive amination of polyalkyleneglycolethers followed by amidation of the resulting polyether amines with fatty acids or fatty acid methylesters applying conventional amination and amidation reactions.

Inventive detergent compositions are particularly efficient if they contain a builder that is capable to remove alkali earth metal cations.

In a preferred embodiment of the present invention inventive detergent compositions additionally comprise
(B) a chelating agent, hereinafter also referred to as chelating agent (B), selected from citric acid and its respective alkali metal salts, and aminocarboxylic acid diacetates including their respective alkali metal salts, hereinafter also referred to as aminocarboxylic acid diacetates (B), and aminosuccinates and their respective alkali metal salts, hereinafter also referred to as aminosuccinates (B).

Aminocarboxylic acid diacetates are compounds with at least one amino group that is carboxy-alkylated with two CH₂-COOH groups. Aminosuccinates are compounds with at least one nitrogen atom per molecule that bears a CH(COOH)CH₂COOH group. In each case, the respective alkali metal salts are preferred over their respective free acids

In a preferred embodiment of the present invention inventive detergent compositions aminocarboxylic acid diacetates are selected from methylglycine diacetic acid (MGDA), and glutamic acid diacetic acid (GLDA).

In inventive automatic detergent compositions, MGDA and GLDA are comprised in the form of alkali metal salts, for example in the form of potassium salts or sodium salts or as mixed sodium-potassium salts.

Preferred alkali metal salts of MGDA are compounds according to the general formula (II a)

[CH₃-CH(COO)-N(CH₂-COO)₂]M¹₃₋ᵣHᵣ (II a)

wherein
M¹ is selected from alkali metal cations, same or different, preferably potassium and especially sodium, and
wherein r is in the range of from zero to 0.5.

Preferred alkali metal salts of GLDA are compounds according to the general formula (II a)

[OOC-CH₂CH₂-CH(COO)-N(CH₂-COO)₂]M¹₄₋ᵣHᵣ (II b)

Wherein r is in the range of from zero to 1.5, and M¹ is defined as above.

It is to be understood that r is an average number.

Compounds according to general formula (II a) and (II b) may be comprised as racemic mixture or as pure enantiomers, especially as L-enantiomers, or as non-racemic mixtures of enantiomers, for example with an enantiomeric excess in the range of from 20 to 85%, the respective L-enantiomer being the predominant enantiomer.

Particularly preferred are racemic mixtures of the trisodium salt of MGDA, racemic mixture or non-racemic mixtures of enantiomers wherein the L-enantiomer prevails, with an enantiomeric excess in the range of from 20 to 85%. Another particularly preferred embodiment is the tetrasodium salt of GLDA as non-racemic mixtures of enantiomers wherein the L-enantiomer prevails, with an enantiomeric excess in the range of from 20 to 99.5%. Another particularly preferred embodiment are mixture of the trisodium and the tetrasodium salts of GLDA each as non-racemic mixtures of enantiomers wherein the L-enantiomers prevail, with enantiomeric excesses in the range of from 20 to 99.5%.

Compounds according to general formula (II a) and (II b) may contain impurities resulting from their synthesis. In the case of MGDA and its alkali metal salts, such impurities may include propionic acid, lactic acid, alanine, nitrilotriacetic acid (NTA) or the like and their respective alkali metal salts, and complexes of Mg²⁺, Ca²⁺, Fe(II+) and Fe(III+). Such impurities are usually present in minor amounts. "Minor amounts" in this context refer to a total of 0.1 to 5% by weight, referring to alkali metal salt of chelating agent (B), preferably up to 2.5% by weight. In the context of the present invention, such minor amounts are neglected when determining the composition of the respective detergent composition according to the present invention.

In one embodiment of the present invention, inventive detergent compositions comprise
(A) in the range of from 0.5 to 10% by weight of additive (A), preferably 2 to 5 % by weight, and
(B) in the range of from 1 to 50% by weight chelating agent (B), preferably 2 to 45 % by weight, more preferably 5 to 40% by weight.

Percentages refer to the total solids content of the respective inventive detergent composition.

Inventive detergent compositions may contain ingredients other than additive (A). Preferably, inventive detergent compositions contain one or more ingredients other than additive (A) and chelating agent (B).

For example, inventive detergent compositions may comprise a surfactant other than additive (A), a builder other than chelating agent (B), or a combination of the foregoing. Examples of such surfactants other than additive (A) are especially non-ionic surfactants other than additive (A).

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (III) 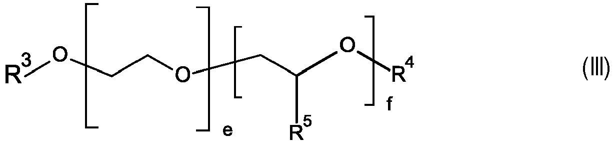 in which the variables are defined as follows:
- R³: is selected from C₈-C₂₂-alkyl, branched or linear, for example n-C₈H₁₇, n-C₁₀H₂₁, n-C₁₂H₂₅, n-C₁₄H₂₉, n-C₁₆H₃₃ or n-C₁₈H₃₇,
- R⁴: is selected from C₁-C₁₀-alkyl, for example methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,
- R⁵: is identical or different and selected from hydrogen and linear C₁-C₁₀-alkyl, preferably in each case identical and ethyl and particularly preferably hydrogen or methyl,

The variables e and f are in the range from zero to 300, where the sum of n and m is at least one, preferably in the range of from 3 to 50. Preferably, e is in the range from 1 to 100 and f is in the range from 0 to 30.

In one embodiment, compounds of the general formula (III) may be block copolymers or random copolymers, preference being given to block copolymers.

Other preferred examples of alkoxylated alcohols are, for example, compounds of the general formula (IV) 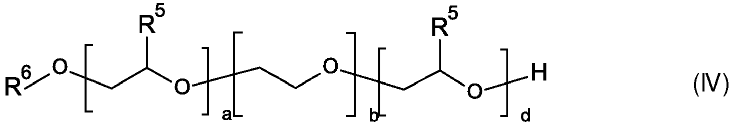 in which the variables are defined as follows:
- R⁵: is identical or different and selected from hydrogen and linear C₁-C₀-alkyl, preferably identical in each case and ethyl and particularly preferably hydrogen or methyl,
- R⁶: is selected from C₆-C₂₀-alkyl, branched or linear, in particular n-C₈H₁₇, n-C₁₀H₂₁, n-C₁₂H₂₅, n-C₁₃H₂₇, n-C₁₅H₃₁, n-C₁₄H₂₉, n-C₁₆H₃₃, n-C₁₈H₃₇,
- a: is a number in the range from zero to 10, preferably from 1 to 6,
- b: is a number in the range from 1 to 80, preferably from 4 to 20,
- d: is a number in the range from zero to 50, preferably 4 to 25.

The sum a + b + d is preferably in the range of from 5 to 100, even more preferably in the range of from 9 to 50.

The variables m and n are in the range from zero to 300, where the sum of n and m is at least one, preferably in the range of from 5 to 50. Preferably, m is in the range from 1 to 100 and n is in the range from 0 to 30.

Another class of non-ionic surfactants are hydroxy mixed ethers. Preferred examples for hydroxy mixed ethers are compounds of the general formula (V) 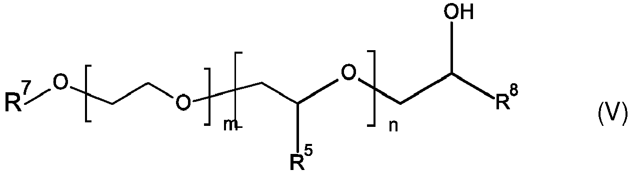 in which the variables are defined as follows:
- R⁵: is identical or different and selected from hydrogen and linear C₁-C₁₀-alkyl, preferably in each case identical and ethyl and particularly preferably hydrogen or methyl,
- R⁷: is selected from C₈-C₂₂-alkyl, branched or linear, for example iso-C₁₁H₂₃, iso-C₁₃H₂₇, n-C₈H₁₇, n-C₁₀H₂₁, n-C₁₂H₂₅, n-C₁₄H₂₉, n-C₁₆H₃₃ or n-C₁₈H₃₇,
- R⁸: is selected from C₁-C₁₈-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl, n-dodecyl, n-tetradecyl, n-hexadecyl, and n-octadecyl.

The variables m and n are in the range from zero to 300, where the sum of n and m is at least one, preferably in the range of from 5 to 50. Preferably, m is in the range from 1 to 100 and n is in the range from 0 to 30.

In a special version, hydroxy mixed ethers are compounds of the general formula (V a)

R⁸-CH(OH)-CH₂-O-(AO)ᵣ-A¹-O-(AO)ᵣ-CH₂-CH(OH)-R⁸ (V a)

wherein
R⁸ are same or different and defined as above,
r same or different and selected from 6 to 50, preferably 12 to 25. In compounds according to general formula (I b), it is preferred that both r assume the same value.

A¹ is selected from C₂-C₁₀-alkylene, straight chain or branched, for example -CH₂-CH₂-, -CH₂-CH(CH₃)-, -CH₂-CH(CH₂CH₃)-, -CH₂-CH(n-C₃H₇)-, -CH₂-CH(n-C₄H₉)-, -CH₂-CH(n-C₅H₁₁)-, -CH₂-CH(n-C₆H₁₃)-, -CH₂-CH(n-C₈H₁₇)-, -CH(CH₃)-CH(CH₃)-, -(CH₂)₃-, -(CH₂)₄-, -(CH₂)₅-, -(CH₂)₆-, -(CH₂)₈-, -(CH₂)₁₀-, -C(CH₃)₂-, -CH₂-C(CH₃)₂-CH₂-, and -CH₂-[C(CH₃)₂]₂-CH₂-.

Preferred residues A¹ are -CH₂-CH₂-, CH₂-CH(CH₃)-, -CH₂-CH(CH₂CH₃)-, -CH₂-CH(n-C₃H₇)-, -CH₂-CH(n-C₄H₉)-, -CH₂-CH(n-C₆H₁₃)-, and -(CH₂)₄-.

Compounds of the general formula (III), (IV) and (V) and especially (V a) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear C₄-C₁₆-alkyl polyglucosides and branched C₈-C₁₄-alkyl polyglycosides such as compounds of general average formula (VI) are likewise suitable. 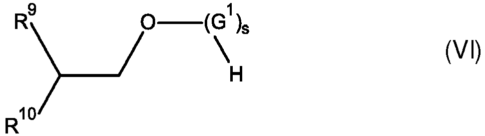 wherein:
- R⁹: is C₁-C₄-alkyl, in particular ethyl, n-propyl or isopropyl,
- R¹⁰: is -(CH₂)₂-R⁹,
- G¹: is selected from monosaccharides with 4 to 6 carbon atoms, especially from glucose and xylose,
- s: in the range of from 1.1 to 4, s being an average number,

Further examples of non-ionic surfactants are compounds of general formula (VII) and (VIII) 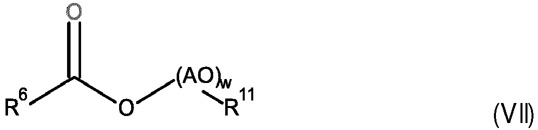 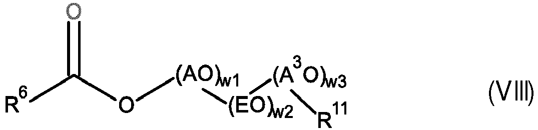
- R⁶: and AO are defined as above,
- R¹¹: selected from C₈-C₁₈-alkyl, branched or linear.
- A³O: is selected from propylene oxide and butylene oxide,
- w: is a number in the range of from 15 to 70, preferably 30 to 50,
- w1 and w3: are numbers in the range of from 1 to 5, and
- w2: is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Examples of (co)polymers that may be comprised are described further down below.

Inventive detergent compositions may comprise one or more anionic or zwitterionic surfactants.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (IX)

R¹²R¹³R¹⁴N→O (IX)

wherein R¹², R¹³, and R¹⁴ are selected independently from each other from aliphatic, cycloaliphatic or C₂-C₄-alkylene C₁₀-C₂₀-alkylamido moieties. Preferably, R¹² is selected from C₈-C₂₀-alkyl or C₂-C₄-alkylene C₁₀-C₂₀-alkylamido and R¹³ and R¹⁴ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

Examples of suitable anionic surfactants are alkali metal and ammonium salts of C₈-C₁₈-alkyl sulfates, of C₈-C₁₈-fatty alcohol polyether sulfates, of sulfuric acid half-esters of ethoxylated C₄-C₁₂-alkylphenols (ethoxylation: 1 to 50 mol of ethylene oxide/mol), C₁₂-C₁₈ sulfo fatty acid alkyl esters, for example of C₁₂-C₁₈ sulfo fatty acid methyl esters, furthermore of C₁₂-C₁₈-alkylsulfonic acids and of C₁₀-C₁₈-alkylarylsulfonic acids. Preference is given to the alkali metal salts of the aforementioned compounds, particularly preferably the sodium salts.

Further examples for suitable anionic surfactants are soaps, for example the sodium or potassium salts of stearic acid, oleic acid, palmitic acid, ether carboxylates, and alkylether phosphates.

In one embodiment of the present invention, inventive detergent compositions may contain 0.1 to 60 % by weight of at least one surfactant, selected from anionic surfactants, amphoteric surfactants and amine oxide surfactants.

In a preferred embodiment, inventive detergent compositions do not contain any anionic surfactant.

Inventive detergent compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate.

Examples of organic peroxide bleaches are organic percarboxylic acids, especially organic percarboxylic acids.

In inventive detergent compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive detergent compositions may comprise, for example, in the range from 3 to 10% by weight of chlorine-containing bleach.

Inventive detergent compositions may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive detergent compositions may comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Inventive detergent compositions may comprise one or more corrosion inhibitors. In the present case, this is to be understood as including those compounds that inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol.

In one embodiment of the present invention, inventive detergent compositions comprise in total in the range from 0.1 to 1.5% by weight of corrosion inhibitor.

Inventive detergent compositions may comprise one or more builders, selected from organic and inorganic builders. Examples of suitable inorganic builders are sodium sulfate or sodium carbonate or silicates, in particular sodium disilicate and sodium metasilicate, zeolites, sheet silicates, in particular those of the formula α-Na₂Si₂O₅, β-Na₂Si₂O₅, and δ-Na₂Si₂O₅, also fatty acid sulfonates, α-hydroxypropionic acid, alkali metal malonates, fatty acid sulfonates, alkyl and alkenyl disuccinates, tartaric acid diacetate, tartaric acid monoacetate, oxidized starch, and polymeric builders, for example polycarboxylates and polyaspartic acid.

Examples of organic builders are especially polymers and copolymers. In one embodiment of the present invention, organic builders are selected from polycarboxylates, for example alkali metal salts of (meth)acrylic acid homopolymers or (meth)acrylic acid copolymers.

Suitable comonomers are monoethylenically unsaturated dicarboxylic acids such as maleic acid, fumaric acid, maleic anhydride, itaconic acid and citraconic acid. A suitable polymer is in particular polyacrylic acid, which preferably has an average molecular weight M_{w} in the range from 2000 to 40 000 g/mol, preferably 2000 to 10 000 g/mol, in particular 3000 to 8000 g/mol. Also of suitability are copolymeric polycarboxylates, in particular those of acrylic acid with methacrylic acid and of acrylic acid or methacrylic acid with maleic acid and/or fumaric acid, and in the same range of molecular weight.

It is also possible to use copolymers of at least one monomer from the group consisting of monoethylenically unsaturated C₃-C₁₀-mono- or C₄-C₁₀-dicarboxylic acids or anhydrides thereof, such as maleic acid, maleic anhydride, acrylic acid, methacrylic acid, fumaric acid, itaconic acid and citraconic acid, with at least one hydrophilic or hydrophobic monomer as listed below.

Suitable hydrophobic monomers are, for example, isobutene, diisobutene, butene, pentene, hexene and styrene, olefins with 10 or more carbon atoms or mixtures thereof, such as, for example, 1-decene, 1-dodecene, 1-tetradecene, 1-hexadecene, 1-octadecene, 1-eicosene, 1-docosene, 1-tetracosene and 1-hexacosene, C₂₂-α-olefin, a mixture of C₂₀-C₂₄-α-olefins and polyisobutene having on average 12 to 100 carbon atoms per molecule.

Suitable hydrophilic monomers are monomers with sulfonate or phosphonate groups, and also nonionic monomers with hydroxyl function or alkylene oxide groups. By way of example, mention may be made of: allyl alcohol, isoprenol, methoxypolyethylene glycol (meth)acrylate, methoxypolypropylene glycol (meth)acrylate, methoxypolybutylene glycol (meth)acrylate, methoxypoly(propylene oxide-co-ethylene oxide) (meth)acrylate, ethoxypolyethylene glycol (meth)acrylate, ethoxypolypropylene glycol (meth)acrylate, ethoxypolybutylene glycol (meth)acrylate and ethoxypoly(propylene oxide-co-ethylene oxide) (meth)acrylate. Polyalkylene glycols here may comprise 3 to 50, in particular 5 to 40 and especially 10 to 30 alkylene oxide units per molecule.

Particularly preferred sulfonic-acid-group-containing monomers here are 1-acrylamido-1-propanesulfonic acid, 2-acrylamido-2-propanesulfonic acid, 2-acrylamido-2-methylpropanesulfonic acid, 2-methacrylamido-2-methylpropanesulfonic acid, 3-methacrylamido-2-hydroxypropanesulfonic acid, allylsulfonic acid, methallylsulfonic acid, allyloxybenzenesulfonic acid, methallyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 3-sulfopropyl acrylate, 2-sulfoethyl methacrylate, 3-sulfopropyl methacrylate, sulfomethacrylamide, sulfomethylmethacrylamide, and salts of said acids, such as sodium, potassium or ammonium salts thereof.

Particularly preferred phosphonate-group-containing monomers are vinylphosphonic acid and its salts.

A further example of builders is carboxymethyl inulin.

Moreover, amphoteric polymers can also be used as builders.

Inventive detergent compositions may comprise, for example, in the range from in total 10 to 70% by weight, preferably up to 50% by weight, of builder. In the context of the present invention, chelating agent (B) is not counted as builder.

In one embodiment of the present invention, inventive detergent compositions may comprise one or more cobuilders.

Inventive detergent compositions may comprise one or more antifoams, selected for example from silicone oils and paraffin oils.

In one embodiment of the present invention, inventive detergent compositions comprise in total in the range from 0.05 to 0.5% by weight of antifoam.

Inventive detergent compositions may comprise one or more enzymes. Examples of enzymes are lipases, hydrolases, amylases, proteases, cellulases, esterases, pectinases, lactases and peroxidases.

In one embodiment of the present invention, inventive detergent compositions may comprise, for example, up to 5% by weight of enzyme, preference being given to 0.1 to 3% by weight. Said enzyme may be stabilized, for example with the sodium salt of at least one C₁-C₃-carboxylic acid or C₄-C₁₀-dicarboxylic acid. Preferred are formates, acetates, adipates, and succinates.

In one embodiment of the present invention, inventive detergent compositions, especially when used as automatic dishwashing detergents, may comprise at least one zinc salt. Zinc salts may be selected from water-soluble and water-insoluble zinc salts. In this connection, within the context of the present invention, water-insoluble is used to refer to those zinc salts which, in distilled water at 25°C, have a solubility of 0.1 g/l or less. Zinc salts which have a higher solubility in water are accordingly referred to within the context of the present invention as water-soluble zinc salts.

In one embodiment of the present invention, zinc salt is selected from zinc benzoate, zinc gluconate, zinc lactate, zinc formate, ZnCl₂, ZnSO₄, zinc acetate, zinc citrate, Zn(NO₃)₂, Zn(CH₃SO₃)₂ and zinc gallate, preferably ZnCl₂, ZnSO₄, zinc acetate, zinc citrate, Zn(NO₃)₂, Zn(CH₃SO₃)₂ and zinc gallate.

In another embodiment of the present invention, zinc salt is selected from ZnO, ZnO·aq, Zn(OH)₂ and ZnCO₃. Preference is given to ZnO·aq.

In one embodiment of the present invention, zinc salt is selected from zinc oxides with an average particle diameter (weight-average) in the range from 10 nm to 100 µm.

The cation in zinc salt can be present in complexed form, for example complexed with ammonia ligands or water ligands, and in particular be present in hydrated form. To simplify the notation, within the context of the present invention, ligands are generally omitted if they are water ligands.

Depending on how the pH of mixture according to the invention is adjusted, zinc salt can change. Thus, it is for example possible to use zinc acetate or ZnCl₂ for preparing formulation according to the invention, but this converts at a pH of 8 or 9 in an aqueous environment to ZnO, Zn(OH)₂ or ZnO·aq, which can be present in non-complexed or in complexed form.

Zinc salt may be present in those inventive automatic dishwashing formulations which are solid at room temperature are preferably present in the form of particles which have for example an average diameter (number-average) in the range from 10 nm to 100 µm, preferably 100 nm to 5 µm, determined for example by X-ray scattering.

Zinc salt may be present in those detergent compositions for home care applications that are liquid at room temperature in dissolved or in solid or in colloidal form.

In one embodiment of the present invention, inventive automatic dishwashing formulations comprise in total in the range from 0.05 to 0.4% by weight of zinc salt, based in each case on the solids content of the composition in question.

Here, the fraction of zinc salt is given as zinc or zinc ions. From this, it is possible to calculate the counterion fraction.

In one embodiment of the present invention, inventive automatic dishwashing formulation contain polyalkylenimine, for example polypropylenimine or polyethylenimine. Polyalkylenimine may be substituted, for example with CH₂COOH groups or with polyalkylenoxide chains, or non-substituted. In one embodiment of the present invention, 60 to 80 mole-% of the primary and secondary amine functions of polyalkylenimines are substituted with CH₂COOH groups or with ethylene oxide or propylene oxide. Particularly preferred are non-substituted polyethylenimine with an average molecular weight M_{w} in a range of from 500 to 20,000 g/mol, determined advantageously by gel permeation chromatography (GPC) in 1.5 % by weight aqueous formic acid as eluent and cross-linked poly-hydroxyethylmethacrylate as stationary phase. In other embodiments, polyethoxylated polyethylenimines are preferred, with an average molecular weight M_{w} in a range of from 2,500 to 50,000 g/mol, determined advantageously by gel permeation chromatography (GPC) in 1.5 % by weight aqueous formic acid as eluent and cross-linked poly-hydroxyethylmethacrylate as stationary phase. In other embodiments, polyethoxylated polypropylenimines are preferred, with an average molecular weight M_{w} in a range of from 2,500 to 50,000 g/mol, determined advantageously by gel permeation chromatography (GPC) in 1.5 % by weight aqueous formic acid as eluent and cross-linked poly-hydroxyethylmethacrylate as stationary phase.

Polyethylenimines and polypropylenimines, non-substituted or substituted as above, may applied in small amounts, for example 0.01 to 2% by weight, referring to the total solids content of the respective inventive automatic dishwashing formulation.

In one embodiment of the present invention, inventive detergent compositions are free from heavy metals apart from zinc compounds. Within the context of the present, this may be understood as meaning that inventive detergent compositions are free from those heavy metal compounds which do not act as bleach catalysts, in particular of compounds of iron and of bismuth. Within the context of the present invention, "free from" in connection with heavy metal compounds is to be understood as meaning that the content of heavy metal compounds that do not act as bleach catalysts is in sum in the range from 0 to 100 ppm, determined by the leach method and based on the solids content. Preferably, detergent compositions according to the invention has, apart from zinc, a heavy metal content below 0.05 ppm, based on the solids content of the formulation in question. The fraction of zinc is thus not included.

Within the context of the present invention, "heavy metals" are defined to be any metal with a specific density of at least 6 g/cm³ with the exception of zinc. In particular, the heavy metals are metals such as bismuth, iron, copper, lead, tin, nickel, cadmium and chromium.

Preferably, inventive automatic dishwashing formulations comprise no measurable fractions of bismuth compounds, i.e. for example less than 1 ppm.

In one embodiment of the present invention, inventive detergent compositions comprise one or more further ingredient such as fragrances, dyestuffs, organic solvents, buffers, disintegrants for tabs, and/or acids such as methylsulfonic acid.

Preferred example automatic dishwashing formulations may be selected according to table 1.

**Table 1: Example detergent compositions for automatic dishwashing**

| All amounts in g/sample | ADW.1 | ADW.2 | ADW.3 |
|---|---|---|---|
| (B1.1) racemic MGDA-Na₃ | 30 | 22.5 | 15 |
| Protease | 2.5 | 2.5 | 2.5 |
| Amylase | 1 | 1 | 1 |
| (A.1) | 5 | 5 | 5 |
| Polyacrylic acid M_{w} 4000 g/mol as sodium salt, completely neutralized | 10 | 10 | 10 |
| Sodium percarbonate | 10.5 | 10.5 | 10.5 |
| TAED | 4 | 4 | 4 |
| Na₂Si₂O₅ | 2 | 2 | 2 |
| Na₂CO₃ | 19.5 | 19.5 | 19.5 |
| trisodium citrate dihydrate | 15 | 22.5 | 30 |
| HEDP | 0.5 | 0.5 | 0.5 |

| | | | |
|---|---|---|---|
| (A.1): n-C₁₇H₃₅-CO-NH-(EO)₂₂-CH₂-CH₂-NH-CO-n-C₁₇H₃₅. x = 22 refers to the weight average molecular weight of polyethylene glycol. Melting point: 55 to 60°C. | | | |

Inventive detergent compositions are excellent in rinsing, especially when used as automatic dishwashing compositions. When used as or the manufacture of solid automatic dishwashing compositions in the form of tabs, such tabs show a very low tendency of breaking.

Another aspect of the present invention relates to a process for making an inventive detergent composition, according to claim 8, hereinafter also referred to as inventive manufacturing process. The inventive manufacturing process includes the step of mixing
(A) at least one additive according to general formula (I) with a melting point in the range of from 40 to 60 °C and
(B) at least one chelating agent selected from citric acid and aminocarboxylic and their respective alkali metal salts
   in the presence or absence of water and removing - if applicable - said water.

In a special embodiment of the present invention, the mixing of additive (A) and chelating (B) and, optionally, one or more additional substance, takes place in the presence of water followed by removal of 80 to 100% by weight of said water by spray granulating or spray drying. Additive (A) and chelating agent (B) have been described in detail above.

Spray drying may be performed in a spray tower. Spray granulation may be carried out in a fluidized bed or in a spouted bed.

Spray-drying and spray granulation will be described in more detail below.

In one embodiment of the present invention, a drying vessel, for example a spray chamber or a spray tower, is being used in which a spray-granulating process is being performed by using a fluidized bed. Such a drying vessel is charged with a fluidized bed of a solid chelating agent (B) or of a mixture of additive (A) and chelating agent (B), obtained by any drying method such as spray drying or evaporation crystallization, and a solution or slurry of solid mixture of additive (A) and chelating agent (B) is sprayed onto or into such fluidized bed together with a hot gas stream. The hot gas inlet stream may have a temperature in the range of from 85 to 350°C, preferably 125 to 220°C.

In one embodiment of the present invention, the fluidized bed may have a temperature in the range of from 80 to 150°C, preferably 100 to 120°C.

Spraying is being performed through one or more nozzles per drying vessel. Suitable nozzles are, for example, high-pressure rotary drum atomizers, rotary atomizers, single-fluid nozzles and two-fluid nozzles, two-fluid nozzles and rotary atomizers being preferred. The first fluid is a solution or slurry obtained by mixing additive (A) and chelating agent (B), the second fluid is compressed gas, for example with a pressure of 1.1 to 7 bar.

In one embodiment of the present invention, the droplets formed during the spray-granulating have an average diameter in the range of from 10 to 500 µm, preferably from 20 to 180 µm, even more preferably from 30 to 100 µm.

In one embodiment of the present invention, the off-gas departing the drying vessel may have a temperature in the range of from 40 to 140°C, preferably 80 to 110°C but in any way colder than the hot gas stream. Preferably, the temperature of the off-gas departing the drying vessel and the temperature of the solid product present in the drying vessel are identical.

In another embodiment of the present invention, spray-granulation is being performed by performing two or more consecutive spray-drying processes, for example in a cascade of at least two spray dryers, for example in a cascade of at least two consecutive spray towers or a combination of a spray tower and a spray chamber, said spray chamber containing a fluidized bed. In the first dryer, a spray-drying process is being performed in the way as follows.

Spray-drying may be preferred in a spray dryer, for example a spray chamber or a spray tower. A solution or slurry containing additive (A) and chelating agent (B) with a temperature preferably higher than ambient temperature, for example in the range of from 50 to 95°C, is introduced into the spray dryer through one or more spray nozzles into a hot gas inlet stream, for example nitrogen or air, the solution or slurry being converted into droplets and the water being vaporized. The hot gas inlet stream may have a temperature in the range of from 125 to 350°C.

The second spray dryer is charged with a fluidized bed with solid from the first spray dryer and solution or slurry obtained according to the above step is sprayed onto or into the fluidized bed, together with a hot gas inlet stream. The hot gas inlet stream may have a temperature in the range of from 125 to 350°C, preferably 160 to 220°C.

In one embodiment of the present invention, especially in a process for making a granule, the average residence time of additive (A) and chelating agent (B), respectively, is in the range of from 2 minutes to 4 hours, preferably from 30 minutes to 2 hours.

In another embodiment, especially in a process for making a spray powder, the average residence time of additive (A) and chelating agent (B), is in the range of from 1 second to 1 minute, especially 2 to 20 seconds.

In one embodiment of the present invention, the pressure in the drying vessel is normal pressure ± 100 mbar, preferably normal pressure ± 20 mbar, for example one mbar less than normal pressure.

In a preferred embodiment of the present invention, an inventive detergent composition or its precursor in a multi-step process that includes mixing component (A) with at least one non-ionic surfactant, for example a compound according to general formula (V) or (V b), in the molten state, cooling down the melt until it solidifies, then confectioning the solidified melt, then milling the resultant mixture together with a milling auxiliary, for example a silica gel or a combination of a silica gel and a silicate, and with at least one chelating agent (B) selected from citric acid and aminocarboxylic acid diacetates and aminosuccinates and their respective alkali metal salts.

In another preferred embodiment of the present invention, an inventive detergent composition or its precursor in a multi-step process that includes melting component (A) without any non-ionic surfactant, cooling down the melt until it solidifies, then confectioning the solidified melt, then milling the resultant mixture together with a milling auxiliary, for example a silica gel or a combination of a silica gel and a silicate, and with at least one chelating agent (B) selected from citric acid and aminocarboxylic acid diacetates and aminosuccinates and their respective alkali metal salts.

In another preferred embodiment of the present invention, an inventive detergent composition or its precursor in a multi-step process that includes melting component (A) without any non-ionic surfactant but with polyethylene glycol instead, cooling down the melt until it solidifies, then confectioning the solidified melt, then milling the resultant mixture together with a milling auxiliary, for example a silica gel or a combination of a silica gel and a silicate, and with at least one chelating agent (B) selected from citric acid and aminocarboxylic acid diacetates and aminosuccinates and their respective alkali metal salts.

To carry out the process according to the invention, firstly component (A) and a non-ionic surfactant are mixed in the molten state. The mixing temperature is selected such that the lower melting component - i.e. said non-ionic surfactant or preferably component (A) - is present in the molten state. The higher-melting component in each case can be present in the solid or molten state. Preferably, component (A) and said non-ionic surfactant, if applicable, are mixed in the proportions intended for formulation in question.

Component (A) and said non-ionic surfactant are mixed until a homogeneous mixture is perceived visually - with the naked eye, i.e. without visual aids.

Preferably, component (A) and said non-ionic surfactant are mixed at a temperature which is at least 5°C above the melting point of a non-ionic surfactant present, particularly preferably at least 10°C.

In a particular embodiment of the present invention, component (A) and said non-ionic surfactant are mixed at a temperature which is at least 5°C above the temperature at which the higher-melting component melts.

To effect the mixing operation, the procedure can involve initially introducing component (A) and said non-ionic surfactant in solid form into a mixing vessel and heating with mixing - for example shaking or preferably with stirring - until the lower-melting component in each case has melted. Then, mixing is continued until a homogeneous mixture is perceived with the naked eye, i.e. neither separate particles nor streaking can be seen.

Examples of suitable mixing vessels for the above first step are stirred vessels such as, for example, stirred reactors and stirred tanks.

In the following step, the mixture obtained in the first step of the process according to the invention is confectioned. In connection with the process according to the invention, this is to be understood as meaning that the mixture from the first step is processed in such a way that it is converted to solid particles with the desired dimensions. Preferred examples are pastillations, flakings, grindings and combinations of at least two of the preceding measures. If the mixture obtainable in the first step of the process according to the invention is to be ground, then it is left to solidify first.

Pastillation can be performed, for example, by pouring a mixture obtained in the first step of the process according to the invention into a mold with corresponding depressions and allowing the mixture to cool in the corresponding mold. Then, the cooled mixture - simply the pastilles - is removed from the mold and mixture is poured afresh into the mold. In another embodiment, cooling belts are selected for the pastillation. Pastilles can for example have a diameter in the range from 4 to 10 mm.

Flaking can be performed for example by using a flaking roller. The size of the flakes can depend on the product properties and the machine settings. As a rule, irregularly shaped flakes are obtained. Suitable average dimensions are, for example, lengths in the range from 1 mm to 2 cm, widths from 1 mm to 1.5 cm and thicknesses in the range from 0.5 mm to 3 mm. Examples of particularly well suited devices for the milling steps are impact mills and cutting mills. While mixing in a mill, grinding and mixing is performed simultaneously.

Said milling may be performed by milling the above confectioned mixture together with at least one milling auxiliary, for example with at least one silica gel or with a combination of at least one silica gel and one silicate, and with component (B).

Silica may be selected from precipitated silica and fumed silica.

Examples of silicates are sodium disilicate and sodium metasilicate, zeolites and sheet silicates, in particular those of the formula α-Na₂Si₂O₅, β-Na₂Si₂O₅ and δ-Na₂Si₂O₅.

In one embodiment of the present invention, either two different silica gels or two different silicates are used as milling auxiliary. Different silica gels or different silicates can differ in each case in particle size, surface acidity or crystal structure.

In another embodiment of the present invention, a silica and a silicate are used as milling auxiliary.

In another embodiment of the present invention, only one milling auxiliary is used.

In one embodiment of the present invention, silica has an average particle diameter (volume-average) in the range from 5 to 100 µm, preferably 5 µm to at most 20 µm, determined by laser diffraction according to ISO 13320-1 (2009).

In one embodiment of the present invention, silicate has an average particle diameter (volume-average) in the range from 5 µm to at most 20 µm, determined by laser diffraction according to ISO 13320-1 (2009).

In one embodiment of the present invention, mills for the third step of the process according to the invention are selected from mills with a relatively small energy input. Preference is given to impact and cutting mills. Granules may be obtained by the above multi-step process.

Granules or powders obtained to the inventive manufacturing process may be converted into tabs very conveniently. The breakage rate is low.

Another aspect of the present invention relates to granules according to claim 10. Such granules are hereinafter also referred to as inventive granules. Inventive phosphate-free granules contain (A) at least one additive according to general formula (I) with a melting point in the range of from 40 to 60°C and in the range of from 5 to 150 alkylene oxide groups two amide groups per molecule.

As mentioned before, additive (A) is a compound according to general formula (I)

R¹-CO-NH-CH₂CH₂-O-(AO)ₓ-CH₂CH₂-NH-CO-R² (I)

wherein
- R¹, R²: are same or different and selected from C₅-C₂₁-alkyl and C₆-C₂₀-alkenyl,
- x: is in the range of from 5 to 150,
- AO: is selected from identical or different alkylene oxides, selected from -CH₂-CH₂-O, -(CH₂)₃-O, -(CH₂)₄-O, -CH₂CH(CH₃)-O, -CH(CH₃)-CH₂-O- and -CH₂CH(n-C₃H₇)-O.

The variables are defined in more details above.

In one embodiment of the present invention inventive granule further contains at least one mixing auxiliary selected from silica gel, silicate and polyethylene glycol.

Inventive granules are very well suitable for making detergent compositions. Another aspect of the present invention thus relates to the use inventive granules for the manufacture of a detergent composition.

The invention is illustrated in more detail by the following working examples.

General remarks: melting points were determined by DSC with a heat rate of 1°C/min in an open aluminum crucible, peak at second cycle, air flow 3 l/h.

In the context of the present invention and unless expressly specified otherwise, percentages and ppm refer to % by weight and weight ppm.

The following substances were used:

### Additive (A.1):

Complexing agent (B.1): MGDA-Na₃, racemic
Melting points were determined by dynamic differential calorimetry (DSC), heating rate of 10K/min ±1K/min; initial weight 6-7 mg; flushing gas 3 I N2/h, Al measuring crucible, open

Components used:
(A.1): n-C₁₇H₃₅-CO-NH-(EO)₂₂--CH₂-CH₂-NH-CO-n-C₁₇H₃₅. The value of x = 22 refers to the weight average of the underlying polyethylene glycol
   Further non-ionic surfactant: (V.1), n-C₁₀H₂₁-CH(OH)-CH₂-O-(EO)₄₀-n-C₁₀H₂₁
(B.1): MGDA-Na₃ - racemic
   Milling auxiliary1: Precipitated silica, average particle diameter d50: 13.5 µm (laser diffraction), surface area according to BET: 190 m²/g, determined by nitrogen adsorption ISO 92777. (c.1) is commercially available as Sipernat® 22 S
   Mixing Auxiliary 2: polyethylene glycol, Mw: 6,000 g/mol

The solid granule was produced in each case as follows:
The components (A.1) was melted in a beaker at 70°C and mixed using a propeller stirrer. Then, the melt was poured onto aluminum foil (20 cm x 10 cm x 1 cm) and solidified at room temperature. This gave wax-like plates.

Pastilles were produced from these wax-like plates using a flake roller. The flake roller used had a diameter of 33 cm, a width of 50 cm and was operated at a speed of 1.2 rpm. The coolant temperature (water) was 16 to 22°C. To produce the pastilles, the procedure in detail involved placing the wax-like plates into a heatable dropping funnel 38 cm in width which was provided on the bottom with 36 holes (diameter 1.5 mm). The melting rate of the plate was adjusted via the funnel temperature of 80 to 100°C in such a way that defined drops were formed on the cooling surface of the roller, said drops solidifying within one revolution and then being stripped off from the roller by means of a non-flexible knife attached thereto.

The pastilles produced in this way were ground in an impact mill (knife mill). For this, the mill was operated with 2 knives and a peripheral speed of 14 m/s. The grinding sieve used was a round perforated sieve with a hole diameter of 3.2 mm and a free surface area of 40%. The pastilles, the component (B.1) and above milling auxiliary were metered into this mill simultaneously and milled.

The following granules according to the invention were obtained, see table 2.

**Table 2: Granule**

| All amounts in % by weight | Gran.1 | Gran.2 | Gran.3 |
|---|---|---|---|
| (A.1) | 97 | 58 | 92 |
| (V.1) | - | 39 | - |
| Milling auxiliary 1 | 3 | 3 | 3 |
| Milling auxiliary 2 | - | - | 5 |

The granules had a good appearance and were free-flowable even after several weeks.

The following mixture was made, Table 3 a.

**Table 3 a: base mixture**

| | [g] |
|---|---|
| (B1.1) racemic MGDA-Na₃ | 10 |
| Protease | 2.5 |
| Amylase | 1 |
| Na salt of polyacrylic acid, M_{w} 4,000 g/mol, completely neutralized | 5 |
| Sodium percarbonate | 10.2 |
| TAED | 4 |
| Na₂Si₂O₅ | 2 |
| Na₂CO₃ | 24.5 |
| trisodium citrate dihydrate | 5 |
| HEDP | 0.8 |

**Table 3 b: compositions of test formulations**

| All amounts in g/sample | TF-1 | C-TF.2 | C-TF.3 |
|---|---|---|---|
| Base mixture, see Table 3 a | 17.1 | 17.1 | 17.1 |
| (A.1) | 0.72 | - | - |
| Non-ionic surfactant 1 | 0.18 | 0.9 | 0.18 |
| Non-ionic surfactant 2 | - | - | 0.72 |

| | | | |
|---|---|---|---|
| Nonionic surfactant 1: n-C₁₀H₂₁-CH(OH)-CH₂-O-(EO)₄₀-n-C₁₀H₂₁ Nonionic surfactant 2: n-C₈H₁₇-CH(OH)-CH₂-O-(EO)₂₂-CH(CH₃)-CH₂-O-n-C₁₀H₂₁ | | | |

A base mixture was made by mixing the ingredients according to Table 3 a.

Portions of 18 g of base mixture were made by combining base mixture according to Table 3 a with the ingredients according to table 3 b. In accordance with Table 3 b, (A.1) and nonionic surfactant 1 were added as solid granular material. If applicable, nonionic surfactant 2 was molten and then added and added under stirring to distribute it in the mixture homogeneously. Test formulation TF-1 - according to the invention - and comparative test formulations C-TF.2 and C-TF.3 were obtained.

### Rinsing experiments:

All dish-wash experiments were carried out in Miele automatic dish wash machines, type G1222 SCL. The program 50°C ("R-time 2", for washing) and 65° for rinsing was selected. No separate rinsing agent was added, no regenerating salt was used. The dish-wash experiments were carried out with water, 21° dH (German hardness), Ca/Mg:HCO₃ (3:1):1.35. In each experiment three knives (stainless steel), three blue melamine resin plates, three drinking glasses and three plates from china were placed in the dishwasher. Before each cycle 100 g of soil, comprising fat, protein and starch in the form of margarine, egg-yolk and starch, were added. In each cycle, 18 g of a formulation according to table 2 were added.

Between two cycles, a waiting period of one hour was observed, of which 10 minutes were with the door of the dishwashing machine closed and 50 minutes with open door. The dishes were checked by visual assessment of the ware after 6 cycles in a darkened chamber under light behind an aperture diaphragm was awarded using a grading scale from 1 (very poor) to 10 (very good). The results are summarized in Table 4.

**Table 4: Rinsing Results**

| Formulation | Spotting, knives | Spotting, glass | Spotting melamine | Spotting, china |
|---|---|---|---|---|
| TF.1 | 10 | 5.0 | 5.3 | 4.7 |
| C-TF.2 | 2.0 | 1.3 | 1.0 | 2.0 |
| C-TF.3 | 7.3 | 4.0 | 5.3 | 3.3 |

## Claims

1. Phosphate-free detergent composition comprising
(A) at least one additive according to general formula (I)
R¹-CO-NH-CH₂CH₂-O-(AO)ₓ-CH₂CH₂-NH-CO-R² (I)
wherein
R¹, R² are same or different and selected from C₅-C₂₁-alkyl and C₆-C₂₀-alkenyl,
x is in the range of from 5 to 150,
AO is selected from identical or different alkylene oxides, selected from -CH₂-CH₂-O, -(CH₂)₃-O, -(CH₂)₄-O, -CH₂CH(CH₃)-O, -CH(CH₃)-CH₂-O- and -CH₂CH(n-C₃H₇)-O,
wherein said additive (A) has a melting point in the range of from 40 to 60°C.

2. Detergent composition according to claim 1 wherein all AO in formula (I) are identical and CH₂-CH₂-O.

3. Detergent composition according to claim 1 or 2 wherein in compound according to general formula (I) R¹ and R² are identical and selected from n-C₆-C₁₈-alkyl.

4. Detergent composition according to any of the preceding claims wherein said composition further comprises
(B) a chelating agent selected from citric acid and aminocarboxylic acid diacetates and aminosuccinates and their respective alkali metal salts.

5. Detergent composition according to claim 4 wherein chelating agent (B) is selected from alkali metal salts of iminodisuccinic acid (IDS), methylglycine diacetic acid (MGDA), and glutamic acid diacetic acid (GLDA).

6. Detergent composition according to any of claims 4 or 5 wherein said composition comprises
in the range of from 0.5 to 10% by weight of additive (A), and
in the range of from 1 to 50% by weight chelating agent (B),
percentages referring to the total solids content of the respective detergent composition.

7. Detergent composition according to any of the preceding claims wherein said additive (A)
is used in combination with at least one non-ionic surfactant according to formula (V) 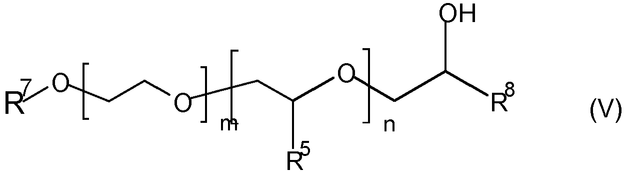 or (V a)
R⁸-CH(OH)-CH₂-O-(AO)ᵣ-A¹-O-(AO)ᵣ-CH₂-CH(OH)-R⁸ (V a)
wherein:
R⁵ is identical or different and selected from hydrogen and linear C₁-C₁₀-alkyl,
R⁷ is selected from C₈-C₂₂-alkyl, branched or linear,
R⁸ is selected from C₁-C₁₈-alkyl,
m and n are in the range from zero to 300, where the sum of n and m is at least one,
r is same or different and selected from 6 to 50
A¹ is selected from C₂-C₁₀-alkylene, straight chain or branched,
and AO is alkylene oxide selected from CH₂-CH₂-O, -(CH₂)₃-O, -(CH₂)₄-O, -CH₂CH(CH₃)-O, -CH(CH₃)-CH₂-O- and CH₂CH(n-C₃H₇)-O.

8. Method of making a detergent composition according to any of claims 4 to 6 by mixing
(A) at least one additive according to general formula (I) with a melting point in the range of from 40 to 60°C and
(B) at least one chelating agent selected from citric acid and aminocarboxylic and their respective alkali metal salts
in the presence or absence of water and removing - if applicable - said water.

9. Method according to claim 8 wherein the mixing of additive (A) and chelating (B) and, optionally, one or more additional substance, takes place in the presence of water followed by removal of 80 to 100% by weight of said water by spray granulating or spray drying.

10. Phosphate-free granule containing
(A) at least one additive according to general formula (I)
R¹-CO-NH-CH₂CH₂-O-(AO)ₓ-CH₂CH₂-NH-CO-R² (I)
wherein
R¹, R² are same or different and selected from C₅-C₂₁-alkyl and C₆-C₂₀-alkenyl,
x is in the range of from 5 to 150,
AO is selected from identical or different alkylene oxides, selected from -CH₂-CH₂-O, -(CH₂)₃-O, -(CH₂)₄-O, -CH₂CH(CH₃)-O, -CH(CH₃)-CH₂-O- and -CH₂CH(n-C₃H₇)-O,
wherein said additive (A) has a melting point in the range of from 40 to 60°C.

11. Granule according to claim 10 wherein said granule further contains at least one mixing auxiliary selected from silica gel, silicate and polyethylene glycol.

12. Use of a granule according to claim 10 or 11 for the manufacture of a detergent composition.

## Patentansprüche

1. Phosphatfreie Reinigungsmittelzusammensetzung, umfassend
(A) mindestens ein Additiv gemäß der allgemeinen Formel (I)
R¹-CO-NH-CH₂CH₂-O-(AO)ₓ-CH₂Ch₂-NH-CO-R² (I)
wobei
R¹, R² gleich oder verschieden sind und aus C₅-C₂₁-Alkyl und C₆-C₂₀-Alkenyl ausgewählt sind,
x im Bereich von 5 bis 150 liegt,
AO aus gleichen oder verschiedenen Alkylenoxiden ausgewählt ist, die aus -CH₂CH₂-O, -(CH₂)₃-O, -(CH₂)₄-O, -CH₂CH(CH₃)-O, -CH(CH₃)-CH₂-O und -CH₂CH(n-C₃H₇)-O ausgewählt sind,
wobei das Additiv (A) einen Schmelzpunkt im Bereich von 40 bis 60 °C aufweist.

2. Reinigungsmittelzusammensetzung nach Anspruch 1, wobei alle AO in Formel (I) gleich sind und für CH₂CH₂-O stehen.

3. Reinigungsmittelzusammensetzung nach Anspruch 1 oder 2, wobei in der Verbindung der allgemeinen Formel (I) R¹ und R² gleich sind und aus n-C₆-C₁₈-Alkyl ausgewählt sind.

4. Reinigungsmittelzusammensetzung nach einem der vorhergehenden Ansprüche, wobei die Zusammensetzung ferner
(B) einen Chelatbildner, der aus Citronensäure und Aminocarbonsäurediacetaten und Aminosuccinaten und deren jeweiligen Alkalimetallsalzen ausgewählt ist,
umfasst.

5. Reinigungsmittelzusammensetzung nach Anspruch 4, wobei der Chelatbildner (B) aus Alkalimetallsalzen von Iminodibernsteinsäure (IDS), Methylglycindiessigsäure (MGDA) und Glutamindiessigsäure (GLDA) ausgewählt ist.

6. Reinigungsmittelzusammensetzung nach Anspruch 4 oder 5, wobei die Zusammensetzung
im Bereich von 0,5 bis 10 Gew.-% Additiv (A) und im Bereich von 1 bis 50 Gew.-% Chelatbildner (B) umfasst, wobei sich die Prozentangaben auf den Gesamtfeststoffgehalt der jeweiligen Reinigungsmittelzusammensetzung beziehen.

7. Reinigungsmittelzusammensetzung nach einem der vorhergehenden Ansprüche, wobei das Additiv (A) in Kombination mit mindestens einem nichtionischen
Tensid gemäß Formel (V) 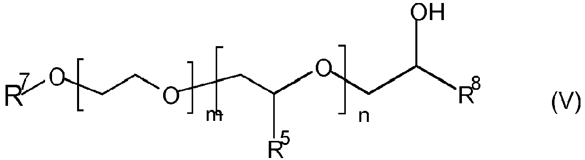 oder (V a)
R⁸-CH(OH)-CH₂-O-(AO)ᵣ-A¹-O-(AO)ᵣ-CH₂-CH(OH)-R⁸ (V a)
verwendet wird, wobei:
R⁵ gleich oder verschieden ist und aus Wasserstoff und linearem C₁-C₁₀-Alkyl ausgewählt ist,
R⁷ aus linearem oder verzweigtem C₈-C₂₂-Alkyl ausgewählt ist,
R⁸ aus C₁-C₁₈-Alkyl ausgewählt ist,
m und n im Bereich von null bis 300 liegen, wobei die Summe von n und m mindestens eins beträgt,
r gleich oder verschieden ist und aus 6 bis 50 ausgewählt ist,
A¹ aus geradkettigem oder verzweigtem C₂-C₁₀-Alkylen ausgewählt ist
und AO für Alkylenoxid steht, das aus CH₂CH₂-O, -(CH₂)₃-O, -(CH₂)₄-O, -CH₂CH(CH₃)-O, -CH (CH₃)-CH₂-O- und CH₂CH(n-C₃H₇)-O ausgewählt ist.

8. Verfahren zur Herstellung einer Reinigungsmittelzusammensetzung nach einem der Ansprüche 4 bis 6 durch Mischen von
(A) mindestens einem Additiv gemäß der allgemeinen Formel (I) mit einem Schmelzpunkt im Bereich von 40 bis 60 °C und
(B) mindestens einem Chelatbildner, der aus Citronensäure und Aminocarbonsäuren und deren jeweiligen Alkalimetallsalzen ausgewählt ist, in Anwesenheit oder Abwesenheit von Wasser und - sofern zutreffend - Entfernen von Wasser.

9. Verfahren nach Anspruch 8, bei dem das Mischen von Additiv (A) und Chelatbildner (B) und gegebenenfalls einer oder mehreren zusätzlichen Substanzen in Gegenwart von Wasser erfolgt, wonach 80 bis 100 Gew.-% des Wassers durch Sprühgranulation oder Sprühtrocknung entfernt werden.

10. Phosphatfreies Granulat, enthaltend (A) mindestens ein Additiv gemäß der allgemeinen Formel (I)
R¹-CO-NH-CH₂CH₂-O-(AO)ₓ-CH₂Ch₂-NH-CO-R² (I)
wobei
R¹, R² gleich oder verschieden sind und aus C₅-C₂₁-Alkyl und C₆-C₂₀-Alkenyl ausgewählt sind,
x im Bereich von 5 bis 150 liegt,
AO aus gleichen oder verschiedenen Alkylenoxiden ausgewählt ist, die aus -CH₂CH₂-O, - (CH₂)₃-O, - (CH₂)₄-O, -CH₂CH(CH₃)-O, -CH(CH₃)-CH₂-O- und -CH₂CH(n-C₃H₇)-O ausgewählt sind,
wobei das Additiv (A) einen Schmelzpunkt im Bereich von 40 bis 60 °C aufweist.

11. Granulat nach Anspruch 10, wobei das Granulat ferner mindestens ein Mischungshilfsmittel enthält, das aus Kieselgel, Silikat und Polyethylenglykol ausgewählt ist.

12. Verwendung eines Granulats nach Anspruch 10 oder 11 zur Herstellung einer Reinigungsmittelzusammensetzung.

## Revendications

1. Composition de détergent sans phosphate comprenant
(A) au moins un additif répondant à la formule générale (I)
R¹-CO-NH-CH₂CH₂-O-(AO)ₓ-CH₂CHrNH-CO-R² (I)
dans laquelle
R¹, R² sont identiques ou différents et sont choisis parmi les groupes alkyle en C₅-C₂₁ et alcényle en C₆-C₂₀,
x est dans la plage de 5 à 150,
AO est choisi parmi des oxydes d'alkylène identiques ou différents, choisis parmi -CH₂-CH₂-O, -(CH₂)₃-O, - (CH₂)₄-O, -CH₂CH(CH₃)-O, -CH(CH₃)-CH₂-O- et -CH₂CH(n-C₃H₇)-O,
dans laquelle ledit additif (A) a un point de fusion dans la plage de 40 à 60 °C.

2. Composition de détergent selon la revendication 1 dans laquelle tous les AO de la formule (I) sont identiques et sont CH₂-CH₂-O.

3. Composition de détergent selon la revendication 1 ou 2 dans laquelle dans le composé répondant à la formule générale (I) R¹ et R² sont identiques et sont choisis parmi les groupes n-alkyle en C₆-C₁₈.

4. Composition de détergent selon l'une quelconque des revendications précédentes, ladite composition comprenant en outre
(B) un agent chélatant choisi parmi l'acide citrique et les diacétates d'acides aminocarboxyliques et les aminosuccinates et leurs sels de métaux alcalins respectifs.

5. Composition de détergent selon la revendication 4 dans laquelle l'agent chélatant (B) est choisi parmi les sels de métaux alcalins de l'acide iminodisuccinique (IDS), de l'acide méthylglycinediacétique (MGDA) et de l'acide *N,N*-diacétique glutamique (GLDA).

6. Composition de détergent selon l'une quelconque des revendications 4 ou 5, ladite composition comprenant dans la plage de 0,5 à 10 % en poids d'additif (A) et dans la plage de 1 à 50 % en poids d'agent chélatant (B), les pourcentages étant par rapport à la teneur en matières solides totales de la composition de détergent respective.

7. Composition de détergent selon l'une quelconque des revendications précédentes dans laquelle ledit additif (A) est utilisé en association avec au moins un tensioactif non ionique répondant à la formule (V) 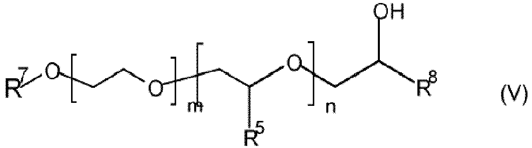 ou (Va)
R⁸-CH(OH)-CH₂-O-(AO)ᵣ-A¹-O-(AO)ᵣ-CH₂-CH(OH)-R⁸ (Va)
dans laquelle :
les R⁵ sont identiques ou différents et sont choisis parmi l'atome d'hydrogène et les groupes alkyle en C₁-C₁₀ linéaires,
R⁷ est choisi parmi les groupes alkyle en C₈-C₂₂, ramifiés ou linéaires,
R⁸ est choisi parmi les groupes alkyle en C₁-C₁₈,
m et n sont dans la plage de zéro à 300, la somme de n et m étant d'au moins un,
les r sont identiques ou différents et sont choisis de 6 à 50
A¹ est choisi parmi les groupes alkylène en C₂-C₁₀, à chaîne droite ou ramifiés, et
AO est un oxyde d'alkylène choisi parmi CH₂-CH₂-O, -(CH₂)₃-O, -(CH₂)₄-O, -CH₂CH(CH₃)-O, -CH(CH₃)-CH₂-O- et CH₂CH(n-C₃H₇)-O.

8. Procédé de préparation d'une composition de détergent selon l'une quelconque des revendications 4 à 6 par mélange de
(A) au moins un additif répondant à la formule générale (I) ayant un point de fusion dans la plage de 40 à 60 °C et
(B) au moins un agent chélatant choisi parmi l'acide citrique et les acides aminocarboxyliques et leurs sels de métaux alcalins respectifs
en présence ou en l'absence d'eau et élimination, le cas échéant, de ladite eau.

9. Procédé selon la revendication 8 dans lequel le mélange d'additif (A) et d'agent chélatant (B) et, éventuellement, d'une ou plusieurs substances supplémentaires, a lieu en présence d'eau suivie de l'élimination de 80 à 100 % en poids de ladite eau par granulation par pulvérisation ou séchage par pulvérisation.

10. Granulé sans phosphate contenant
(A) au moins un additif répondant à la formule générale (I)
R¹-CO-NH-CH₂CH₂-O-(AO)ₓ-CH₂CH₂-NH-CO-R² (I)
dans lequel
R¹, R² sont identiques ou différents et sont choisis parmi les groupes alkyle en C₅-C₂₁ et alcényle en C₆-C₂₀,
x est dans la plage de 5 à 150,
AO est choisi parmi des oxydes d'alkylène identiques ou différents, choisis parmi -CH₂-CH₂-O, -(CH₂)₃-O, -(CH₂)₄-O, -CH₂CH(CH₃)-O, -CH(CH₃)-CH₂-O- et -CH₂CH(n-C₃H₇)-O,
dans lequel ledit additif (A) a un point de fusion dans la plage de 40 à 60 °C.

11. Granulé selon la revendication 10, ledit granulé contenant en outre au moins un adjuvant de mélange choisi parmi du gel de silice, du silicate et du polyéthylèneglycol.

12. Utilisation d'un granulé selon la revendication 10 ou 11 pour la fabrication d'une composition de détergent.
